# EUROPÄISCHE PATENTSCHRIFT

(11) **EP 3 144 449 B1**
(45) Veröffentlichungstag und Bekanntmachung des Hinweises auf die Patenterteilung: **06.05.2020**
(21) Anmeldenummer: 16188553.8
(22) Anmeldetag: 13.09.2016
(51) Int. Cl.: E04F 15/10, B32B 19/02, B32B 19/04, E04F 15/02

(54) **PLATTENFÖRMIGES BAUELEMENT**
PLATE-SHAPED BUILDING ELEMENT
ÉLEMENT DE CONSTRUCTION EN FORME DE PLAQUE

(30) Priorität: 16.09.2015 DE 102015115603
(43) Veröffentlichungstag der Anmeldung: 22.03.2017
(73) Patentinhaber: Schulte, Guido, 59602 Rüthen-Meiste (DE)
(72) Erfinder: Schulte, Guido, 59602 Rüthen-Meiste (DE)
(74) Vertreter: Griepenstroh, Jörg

(56) Entgegenhaltungen:
- WO-A1-2013/179260
- WO-A2-2004/110748
- DE-U1-202016 001 597
- US-A- 4 756 955

## Beschreibung

Die Erfindung betrifft ein plattenförmiges Bauelement, insbesondere ein Fußbodenpaneel, welches eine Trägerplatte mit einer oberseitigen Dekorschicht aufweist, wobei die Dekorschicht ein Dekorpapier umfasst.

Als Fußbodenbelag haben Laminatböden einen hohen Marktanteil. Die klassische Laminatpaneele ist ein Kompositwerkstoff mit mehrschichtigem Aufbau. Als Trägerplatte dient üblicherweise eine hochverdichtete Faserplatte (HDF), auf deren Oberseite eine Dekorschicht aufgebracht ist. Die Dekorschicht umfasst konventionell ein hochabriebfestes Overlay und darunter ein melaminharzimprägniertes Dekorpapier. Unterseitig der Trägerplatte ist ein Gegenzug aufgebracht.

Eine andere Form eines Fußboden-, Wand- oder Deckenpaneels zählt durch die DE 10 2013 113 478 A1 zum Stand der Technik. Die Trägerplatte besteht aus einem Verbundwerkstoff aus Fasern und einem hydraulischen Bindemittel. Die Dekorschicht besteht aus einem naturwerkstoffverstärktem Kunststoff. Insbesondere ist die Trägerplatte eine Faserzementplatte oder eine Magnesitplatte. Die Trägerplatte und die Dekorschicht sind miteinander heiß verpresst.

Weiterhin ist aus der DE 10 2005 017 392 A1 ein Fußbodenpaneel bekannt mit einer Trägerplatte und einer oberen Deckschicht. Die Trägerplatte besteht aus einem mineralischen Material, insbesondere aus Gips, Zement oder Gesteinsmehl.

Auch die DE 199 44 399 A1 offenbart ein Fußbodenpaneel. Die dort beschriebene Trägerplatte ist aus Polyurethan oder Acrylat als Bindemittel und Füllstoffen gebildet. Hierbei kommen mineralische Füllstoffe zur Anwendung, beispielsweise Kalk, Quarz, Sand und Ähnliches.

Aus der DE 10 2014 002 154 A1 geht eine Gebäudeplatte hervor, insbesondere zur Verwendung als Boden-, Wand- oder Deckenplatte, mit einer Trägerplatte, an der randseitig Verriegelungskonturen vorgesehen sind und einer Oberflächenschicht aus einem mineralischen Material. Die Oberflächenschicht soll wenigstens eine Schicht aus Faserzement aufweisen.

Im Umfang der EP 0 608 400 B1 wird eine unter Wärme und Druck hergestellte Schichtpressstoffstruktur beschrieben mit einem aus einer Faserzementplatte bestehenden Kern. Die Dekorschicht umfasst eine harzgetränkte Papierzwischenlage, auf die eine harzgetränkte Zier-Overlaylage auflaminiert ist. Trägerplatten auf Zement- bzw. Zementfaserbasis besitzen jedoch je nach Einsatzfall nicht die besten Voraussetzungen hinsichtlich der Festigkeit und Steifigkeit.

Die WO 2004/110748 A2 betrifft eine mehrschichtige, hochverdichtete Mineralfaserplatte sowie ein Verfahren zur Herstellung derselben. Die Mineralfaserplatte besteht aus mindestens zwei Schichten, wobei mindestens eine Schicht aus faserförmigem Granulat besteht und mindestens eine Schicht aus granuliertem Granulat. Der Durchmesser des granulierten Granulats ist 1,5 bis 5mal größer im Vergleich zu dem faserförmigen Granulat. Bei dem faserförmigen Granulat kann es sich um Mineralwolle bzw. Steinwolle handeln. Diese werden mit Phenol-Formaldehyd-Harz verpresst.

Ferner zeigt die US 4,756,955 A eine hochdichte Verbundplatte auf der Basis diskontinuierlicher Mineralfasern. Die Platte hat einen Gehalt an Mineralfasern von mehr als 70 Gew.-% des Gesamtgewichts der Fasern und des Bindemittels sowie eine Dichte zwischen 400 und 1.600 kg/m3. Die Platte kommt insbesondere als Verbunddämmplatte zur Anwendung und wird durch Komprimieren der Mineralfasern erzeugt, die mit einem polymerisierbaren Harz versehen sind.

Der Erfindung liegt ausgehend vom Stand der Technik die Aufgabe zugrunde, ein hinsichtlich seiner mechanischen Eigenschaften weiter verbessertes plattenförmiges Bodenelement, insbesondere ein Fußbodenpaneel, aufzuzeigen, welches hochstabil, verzugsarm und feuchtigkeitsunempfindlich ist sowie eine sehr gute Feuerfestigkeit aufweist.

Die Lösung dieser Aufgabe besteht nach der Erfindung in einem plattenförmigen Bodenelement gemäß Anspruch 1.

Vorteilhafte Ausgestaltungen und Weiterbildungen des erfindungsgemäßen Bauelements sind Gegenstand der abhängigen Ansprüche 2 bis 8.

Gemäß der Erfindung besteht die Trägerplatte aus verdichteter Mineralwolle. Erfindungsgemäß handelt es sich bei der Mineralwolle um Steinwolle. Bei der Herstellung der Trägerplatte wird Mineralwolle mit wärmehärtenden synthetischen Bindemitteln gepresst und hochverdichtet. Im Rahmen der Erfindung weist die Trägerplatte eine Dichte von größer oder gleich (≥) 800 kg/m3 (Kilogramm pro Kubikmeter) auf. Insbesondere liegt die Dichte der Trägerplatte zwischen 800 kg/m3 und 1.500 kg/m3, vorzugsweise zwischen 900 kg/m3 und 1.400 kg/m3. Ein weiterer wesentlicher Aspekt der Erfindung liegt in der Querzugfestigkeit der Trägerplatte. Die Trägerplatte weist eine Querzugfestigkeit von größer oder gleich 2,5 N/mm2 (Newton pro Quadratmillimeter), insbesondere zwischen 2,5 N/mm2 und 6,0 N/mm2 auf. Besonders bevorzugt liegt die Querzugfestigkeit zwischen 3,5 N/mm2 und 5,0 N/mm2. Charakteristisch ist ferner das geringe Feuchtigkeitsabsorptionsvermögen der Trägerplatte. Die Trägerplatte weist bezogen auf ihr Trockenausgangsgewicht ein Feuchtigkeitsabsorptionsvermögen von kleiner oder gleich (≤) 5 % auf, insbesondere liegt das Feuchtigkeitsabsorptionsvermögen zwischen 1,0 % bis 3,0 %. Dieses Feuchtigkeitsabsorptionsvermögen gewährleistet einerseits, dass beim Verpressen von Dekorschicht und Trägerplatte entstehende Feuchtigkeit im erforderlichen Maße in die Trägerplatte diffundieren kann bzw. von dieser absorbiert wird. Andererseits macht das geringe Feuchtigkeitsabsorptionsvermögen das plattenförmige Bauelement feuchtigkeitsunempfindlich. Hierdurch ist das Bauelement auch für die Verwendung in Feuchtraumbereichen geeignet.

Die Dekorschicht umfasst ein flächiges Dekorsubstrat. Unter einem flächigen Dekorsubstrat wird im Rahmen der Erfindung ein Dekorpapier, insbesondere ein bedrucktes Dekorpapier oder ein bedrucktes Trägervlies, insbesondere ein dekorativ bedrucktes Trägervlies, verstanden.

Die Seitenränder der Trägerplatte sind profiliert und mit Verriegelungsmitteln versehen. Erfindungsgemäß sind die Trägerplatte und die Dekorschicht miteinander verpresst.

Die vorteilhaften Aspekte der Erfindung ergeben sich aus der Kombination der Trägerplatte aus verdichteter Steinwolle und der Dekorschicht, die ein flächiges Dekorsubstrat, insbesondere ein Dekorpapier oder ein bedrucktes Trägervlies, umfasst. Diese obere Beschichtung bzw. Dekorschicht erfüllt die Funktion einer hochwertigen Dekor- und Verschleißschicht. Die Dekorschicht besteht aus einem oder mehreren mit Harz getränkten Papierlagen oder Vlieslagen, die auf die Trägerplatte aus verdichteter Mineralwolle unter Druck und Wärme direkt aufgepresst und durch Polymerisation des Harzes mit der Trägerplatte verbunden werden.

Erfindungsgemäß ist die Dekorschicht mehrlagig aufgebaut und umfasst insbesondere mehrere Lagen von Dekorpapier und/oder Vliesen und/oder Kraftpapier und/oder ein Overlay und/oder eine Versiegelung. Ein Overlay ist hierbei die oberste Schicht der Dekorschicht und verleiht dem plattenförmigen Bauelement besonders robuste Oberflächeneigenschaften. Das hochwertige Dekorpapier oder Trägervlies ist mit einem beliebigen Motiv bedruckt. Es bestimmt den optischen Eindruck des Bauelements.

Die Dekorschicht kann auch einen elektronenstrahl-gehärteten Lack umfassen. In die Dekorschicht kann ferner Korund zur Bestimmung der Abriebfestigkeit der Oberfläche eingebracht sein.

Eine für die Praxis vorteilhafte Ausführungsform sieht vor, dass ein mehrlagiger Aufbau der Dekorschicht eine Lage umfasst, die aus einem gebundenen Pulvergemisch gebildet ist. Das Pulvergemisch enthält ein Pulver in einem Anteil zwischen 30 % und 70 %. Weiterhin sind in dem Pulvergemisch Harze, insbesondere duroplastische Harze in Pulverform, enthalten. Bei dem Pulver handelt es sich insbesondere um Biomaterialpartikel, vorzugsweise Holzpartikel oder Steinpartikel. Das Pulver kann auch aus der mechanischen Bearbeitung der Trägerplatte stammen. Hierbei handelt es sich um Steinmehl bzw -pulver, welches bei der Herstellung der Trägerplatte oder der Herstellung der randseitigen Verriegelungsmittel anfällt. Hierbei handelt es sich folglich um Steinmehl oder Steinpulver bzw. Steinwollepulver oder -stäube. Auch mineralische Natursteinkomponenten sind als Pulver möglich und gut geeignet, beispielsweise Pulver auf Basis von Glimmer, Granit, Dolomit oder Ähnlichem. Ferner kann das Pulvergemisch Farbpigmente und/oder Korund enthalten. Bei dem Harz im Pulvergemisch handelt es sich insbesondere um ein duroplastisches Harz, vorzugsweise um ein Harnstoffharz oder um ein Melaminharz.

Vorzugsweise wird die Lage aus Pulvergemisch auf die Oberseite der Trägerplatte bzw. der Ausgangsträgerplatte aufgetragen. Anschließend wird hierauf das Dekorpapier angeordnet. Gegebenenfalls können weitere Lagen aufgebaut werden.

Der aus Trägerplatte bzw. Ausgangsträgerplatte und den mehreren Lagen der Dekorschicht gebildete Mehrschichtkörper wird dann unter Temperatur und Druckeinwirkung in einer Presse verpresst.

Die Lage aus Pudergemisch trägt zu einer Verbesserung der Haftung zwischen Trägerplatte und Dekorschicht bei bzw. unterstützt die Haftung der Dekorschicht auf der Trägerplatte vorteilhaft.

Die Stärke bzw. Dicke der Trägerplatte liegt zwischen 4 mm und 12 mm, vorzugsweise ist die Dicke 5 mm bis 8 mm. Grundsätzlich können auch Trägerplatten mit größeren Dicken im Bereich von 10 mm bis 25 mm eingesetzt werden. Für den Einsatz im Fußbodenbereich werden Plattenstärken zwischen 5 mm und 8 mm bevorzugt.

Ein weiterer Aspekt der Erfindung sieht vor, dass unterhalb der Trägerplatte ein Gegenzug vorgesehen ist. Der Gegenzug unterstützt die Formstabilität des Bauelements und kann darüber hinaus zur Feuchtigkeitsabsperrung sowie zur Trittschallisolierung dienen.

Als Gegenzug kommt üblicherweise ein Gegenzugpapier zum Einsatz. Möglich ist es, den Gegenzug gleichartig zur Dekorschicht aufzubauen.

Die Verriegelungsmittel an den Seitenrändern der Trägerplatte können materialeinheitlich einteilig aus dem Werkstoff an der Trägerplatte ausgebildet sein. Gängige Verriegelungsmittel bestehen in Form von Nut und Feder. Besonders vorteilhaft sind sogenannte Klickverbindungen mit Rastzungen und Rastlaschen. Weiterhin können Verriegelungsmittel als zweiteilige Systeme ausgeführt sein und insbesondere quer- und/oder längsverlagerbare Verschiebeelemente oder Rastelemente umfassen.

Bei einem Oberflächenbelag aus plattenförmigen Bauelementen, insbesondere einem Fußbodenbelag, gelangen die Verriegelungsmittel von benachbarten Bauelementen miteinander in Eingriff. Hierdurch entsteht eine spaltfreie sowie leimlose und zug- sowie druckfeste Verbindung zwischen den verlegten Bauelementen.

Der Verlegevorgang von Bauelementen kann dadurch verbessert werden, dass die Seitenränder der Trägerplatte, insbesondere im Bereich der Verriegelungsmittel, mit einem Gleitmittel versehen sind. Beispielsweise kann als Gleitmittel ein Öl, ein Wachs oder ein anderes gute Gleiteigenschaften aufweisendes Gleitmittel, beispielsweise Paraffin oder Teflon, auf die Seitenränder aufgebracht sein.

Die Feuchtigkeitsstabilität und -unempfindlichkeit eines erfindungsgemäßen Bauelements kann weiterhin verbessert werden, wenn auf die Seitenränder der Trägerplatte, insbesondere im Bereich der Verriegelungsmittel, ein Dichtmittel aufgebracht ist. Hierbei kann es sich ebenfalls um ein Öl oder ein Wachs oder Ähnliches handeln. Insbesondere erfolgt die Imprägnierung mit einem Dichtmittel umlaufend sowohl an den längs- als auch an den kopfseitigen Seitenrändern eines Bauelements. Diese Maßnahme trägt zu einer Verringerung der Wasserabsorption durch die profilierten Seitenränder bei.

Als Gleitmittel ebenso wie als Dichtmittel zur Feuchtigkeitsimprägnierung können auch mittels Nanomaterialien modifizierte Flüssigkeiten oder gelartige Substanzen zum Einsatz gelangen.

In diesem Zusammenhang ist es ferner möglich, die Seitenränder der Trägerplatte insbesondere im Bereich der Verriegelungsmittel geometrisch zu gestalten, dass ein Flüssigkeitsdurchgang verhindert wird. Hierzu sind die Verriegelungsmittel mit Nuten, Stegen, Schrägen und/oder Hinterschneidungen versehen, die eine Umläufigkeit bzw. den Flüssigkeitsdurchgang verhindern.

Die praktische Anwendung eines erfindungsgemäßen Bauelements kann weiterhin verbessert werden, wenn die Unterseite profiliert bzw. strukturiert ist. Insbesondere ist die Oberfläche der Unterseite durch eine Profilierung vergrößert und/oder aufgeraut oder hat eine geprägte Struktur. Durch die Profilierung der Unterseite erhält diese eine klebetechnisch vorteilhafte Struktur. Das erfindungsgemäße Bauelement ist hierdurch besonders gut geeignet für eine klebetechnische Verlegung auf einem Untergrund mittels geeigneter Klebersysteme.

Möglich ist es, die Bauelemente mittels Polyurethan zu verkleben. Weiterhin können handelsübliche Fliesenkleber zum Einsatz gelangen. Wie bereits ausgeführt, wird die klebtechnische Verlegung durch die Profilierung bzw. Prägestruktur der Unterseite des Bauelements unterstützt, welche eine mechanische Verkrallung mit dem Klebstoffsystem ermöglicht.

Beim Pressvorgang kann die Oberfläche der Dekorschicht durch ein Strukturblech oder einen andersartigen Strukturgeber mit einer Struktur oder einem Muster versehen werden. Die Strukturmöglichkeiten sind dabei vielfältigst. Es sind auch Strukturen denkbar, bei denen der Strukturverlauf synchron zu dem Dekor verläuft. Die Struktur kann im Glanzgrad in Teilbereichen variieren. Weiterhin sind verschiedene Strukturtiefen möglich.

Die Deckschicht hat eine sichtseitige bzw. oberseitige Struktur mit einer Strukturtiefe von insbesondere größer 80 µm. Erfindungsgemäß erhält die Dekorschicht beim Verpressen von Trägerplatte und Dekorschicht ihre abschließende Optik, d. h. die Oberseite bzw. die Sichtseite der Dekorschicht ist oberflächenfertig. Grundsätzlich braucht keine Versiegelung oder eine ähnliche Nachbeschichtung bzw. -behandlung erfolgen.

Ein großer Vorteil des erfindungsgemäßen plattenförmigen Bauelements ist auch, dass dieses nach dem Verpressen bereits eine gebrauchsfertige Oberfläche zeigt, also grundsätzlich nicht mehr poliert, lackiert oder anderweitig nachbehandelt werden muss. Das erfindungsgemäße Bauelement ist feuchtigkeitsbeständig und weist ein sehr gutes Brandverhalten bzw. eine hohe Feuerfestigkeit auf. Praktische Versuche lassen erwarten, dass das Bauelement im Brandverhalten als schwer entflammbar klassifiziert wird.

Die Erfindung ist nachfolgend anhand von in den Zeichnungen dargestellten Ausführungsbeispielen näher beschrieben. Es zeigen:
- Figur 1a) und b): eine erste Ausführungsform eines erfindungsgemäßen plattenförmigen Bauelements in Form eines Fußbodenpaneels;
- Figur 2a) und b): eine zweite Ausführungsform eines erfindungsgemäßen plattenförmigen Bauelements in Form eines Fußbodenpaneels;
- Figur 3a) und b): eine dritte Ausführungsform eines erfindungsgemäßen plattenförmigen Bauelements in Form eines Fußbodenpaneels und
- Figur 4a) und b): eine vierte Ausführungsform eines erfindungsgemäßen plattenförmigen Bauelements in Form eines Fußbodenpaneels.

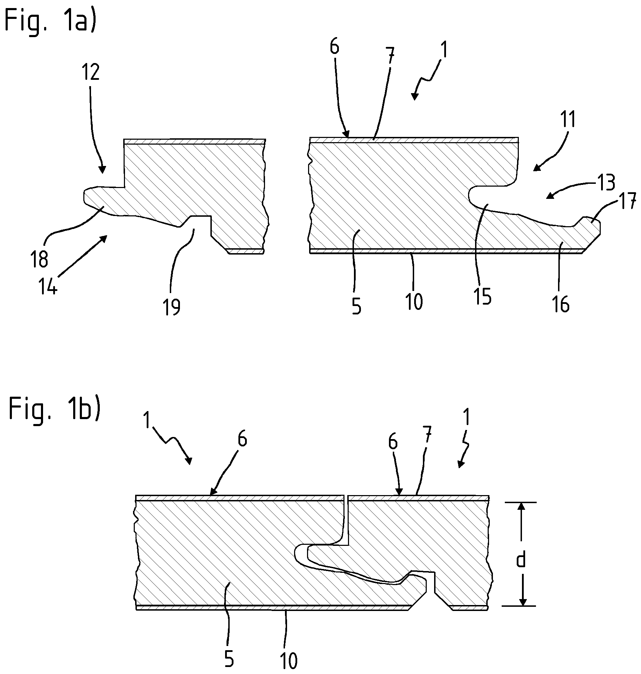

Einander entsprechende Bauteile bzw. Bauteilkomponenten sind in den Figuren mit gleichen Bezugszeichen versehen. Die Figuren 1 bis 4 sind technisch schematisiert und nicht maßstäblich zu verstehen.

Die Figuren 1 bis 4 zeigen jeweils eine Ausführungsform eines erfindungsgemäßen Fußbodenpaneels 1, 2, 3 und 4. Jedes Fußbodenpaneel 1 - 4 umfasst eine Trägerplatte 5 und eine oberhalb der Trägerplatte 5 angeordnete Dekorschicht 6.

Die Trägerplatte 5 besteht aus verdichteter Mineralwolle. Zur Herstellung der Trägerplatte 5 wird Mineralwolle mit wärmehärtenden synthetischen Bindemitteln gepresst und hoch verdichtet. Die Dicke d der Trägerplatte 5 liegt zwischen 4 mm und 12 mm, insbesondere beträgt die Dicke 5 mm bis 8 mm.

Die Trägerplatte 5 besitzt eine Dichte von größer oder gleich 800 kg/m3, insbesondere liegt die Dichte zwischen 800 kg/m3 und 1.500 kg/m3. Vorzugsweise weist die Trägerplatte 5 eine Dichte von 900 kg/m3 bis 1.400 kg/m3 auf.

Weiterhin zeichnet sich die Trägerplatte 5 durch ihre hohe Querzugfestigkeit auf. Die Querzugfestigkeit ist größer oder gleich (≥) 2,5 N/mm2. Insbesondere liegt die Querzugfestigkeit zwischen 2,5 N/mm2 und 6 N/mm2. Als besonders vorteilhaft wird eine Trägerplatte angesehen mit einer Querzugfestigkeit von 3,5 N/mm2 bis 5,0 N/mm2.

Charakteristisch für die Trägerplatte 5 ist weiterhin ihr geringes Feuchtigkeitsabsorptionsvermögen, welches kleiner oder gleich (≤) 5 % ist, bezogen auf das Trockenausgangsgewicht der Trägerplatte. Insbesondere ist das Feuchtigkeitsabsorptionsvermögen in einem Bereich zwischen 1,0 % bis 3,0 %.

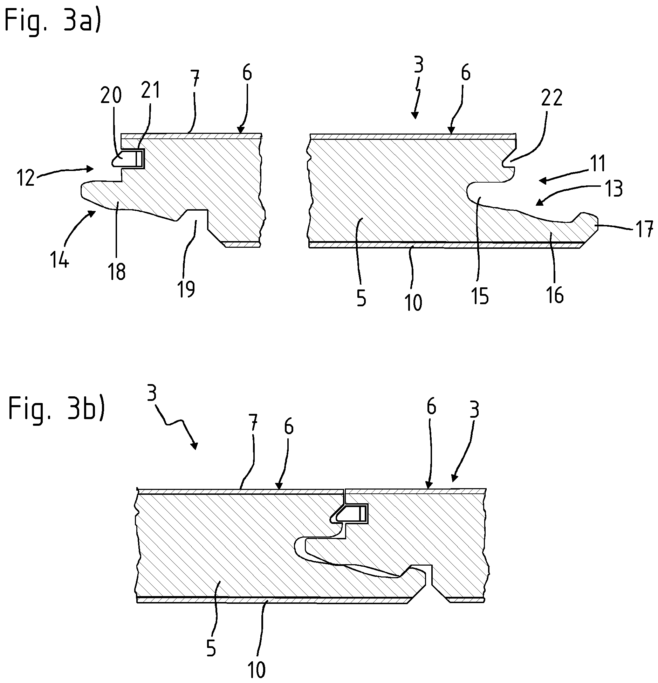

Die Dekorschicht 6 ist mehrlagig aufgebaut. In der Ausführungsform des Fußbodenpaneels 1 bzw. 3 gemäß der Figur 1 bzw. der Figur 3 umfasst die Dekorschicht 6 ein flächiges Dekorsubstrat 7 in Form eines melaminharzimprägnierten Dekorpapiers und ein nicht gesondert dargestelltes hochabriebfestes Overlay. Bei dem flächigen Dekorsubstrat 7 kann es sich auch um ein bedrucktes Trägervlies handeln.

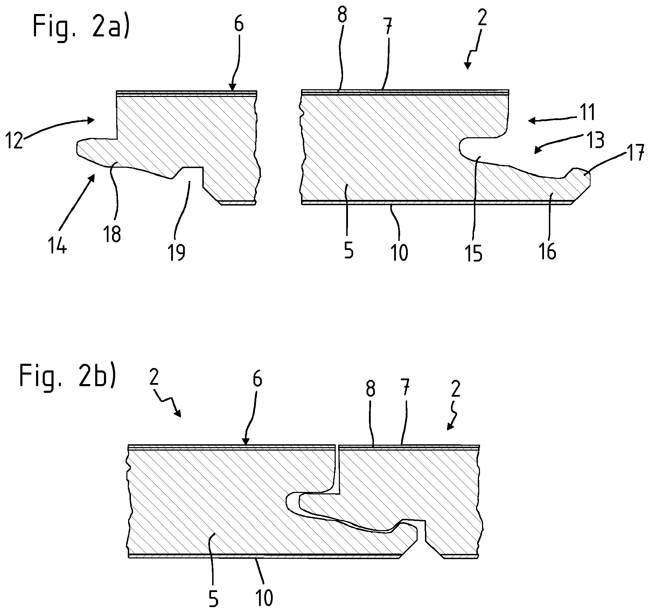

Die Dekorschicht 6 des Fußbodenpaneels 2 gemäß der Ausführungsform von Figur 2 umfasst ein flächiges Dekorsubstrat 7 in Form von Dekorpapier sowie ein flächiges Substrat bzw. eine Lage 8 in Form eines phenolharzimprägniertes Kernlagenpapier und ein Overlay. Bei der Lage 8 kann es sich auch um eine Lage aus einem gebundenen Pulvergemisch handeln. Das Pulvergemisch wird gemeinsam mit dem Dekorpapier 7 unter Druck und Temperatureinwirkung mit der Trägerplatte 5 verpresst. Das Pulvergemisch besteht im Wesentlichen aus Pulver, insbesondere aus Biomaterialpartikeln, insbesondere Holz- oder Steinpartikeln sowie Harzen in Pulverform, vorzugsweise duroplastischen Harzen. Das Pulver kann auch aus der Herstellung der Trägerplatte 5 bzw. deren mechanischen Bearbeitung stammen. Hierbei handelt es sich folglich um Steinmehl oder Steinpulver bzw. Steinwollepulver oder -stäube. Auch mineralische Natursteinkomponenten sind als Pulver möglich und gut geeignet, beispielsweise Pulver auf Basis von Glimmer, Granit, Dolomit oder Ähnlichem.

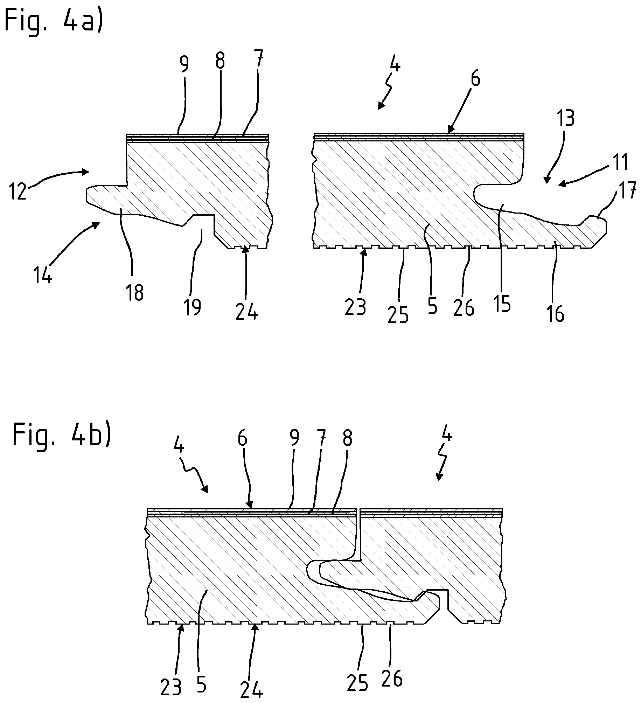

Die Figur 4 zeigt ein Fußbodenpaneel 4 mit einem zumindest dreilagigen Aufbau der Dekorschicht 6 umfassend ein Dekorpapier 7, eine Lage 8 aus phenolharzimprägniertes Kernlagenpapier bzw. ein Kraftpapier und ein Overlay bzw. eine Versiegelungslage 9. Die Lage 8 kann, wie zuvor beschrieben, auch aus einem gebundenen Pulvergemisch gebildet sein.

Bei den Fußbodenpaneelen 1 bis 3 ist unterseitig der Trägerplatte 5 ein Gegenzug 10 vorgesehen.

Trägerplatte 5 und Dekorschicht 6 sind miteinander verpresst. Dies erfolgt unter Druck und Wärmeeinwirkung. Die Dekorschicht kann beim Pressvorgang auch eine eingeprägte Oberflächenstruktur erhalten. In einer vorteilhaften Ausgestaltung erfolgt dies in Abstimmung auf das Dekorbild des Dekorpapiers 7. Vorzugsweise wird die eingeprägte Oberflächenstruktur synchron zum Dekorbild des Dekorpapiers 7 geprägt, so dass diese übereinander liegen, was eine besonders naturgetreue Optik ergibt.

Die aus hochverdichteter gepresster Mineralwolle gebildete Trägerplatte 5 ist nicht brennbar, zumindest schwer entflammbar. Weiterhin weist sie wärme- und schalldämmende bzw. schallabsorbierende Eigenschaften auf.

Wie in den Figuren 1 bis 4 zu erkennen, sind die Seitenränder 11, 12 des Fußbodenpaneels 1 - 4 profiliert und mit Verriegelungsmitteln 13, 14 versehen. Die Figuren 1a), 2a), 3a) und 4a) zeigen jeweils die Seitenränder 11, 12 eines Fußbodenpaneels 1, 2, 3 bzw. 4 wohingegen die Figuren 1b), 2b), 3b) und 4b) jeweils einen Ausschnitt aus zwei miteinander verbundenen Fußbodenpaneelen 1, 2, 3 bzw. 4 zeigen, bei denen die Verriegelungsmittel 13, 14 im gegenseitigen Eingriff stehen.

Die Profilierung ist an der Trägerplatte 5 ausgebildet und weist bei dem Fußbodenpaneel 1 - 4 leistenartige Verriegelungsmittel 13, 14 auf. Hierzu sind an dem ersten Seitenrand 11 das Verriegelungsmittel 13 mit einer durchgehenden Kupplungsnut 15 und einer bodenseitig vorspringenden Rastzunge 16 vorgesehen. Am freien Ende der Rastzunge 16 ist eine durchgehende nasenartig ausgebildete Rippe 17 ausgebildet. Bei dem gegenüberliegenden zweiten Seitenrand 12 ist das Verriegelungsmittel 14 durch eine vorspringende Kupplungsfeder 18 ausgebildet. Unterseitig der Kupplungsfeder 18 ist eine Rastnut 19 vorgesehen. Die Kupplungsnut 15 und die Kupplungsfeder 18 sind konturmäßig so aufeinander abgestimmt, dass sie beim Verlegen der Fußbodenpaneele 1 - 4 bei in einem Fußbodenbelag benachbarten Fußbodenpaneelen 1 - 4 in Eingriff gelangen. Hierbei greifen die Kupplungsfedern 18 in die Kupplungsnuten 15. Auf diese Weise können die Fußbodenpaneele 1 - 4 entlang ihrer Seitenränder 11, 12 spaltfrei und leimlos zug- und druckfest gefügt werden.

Bei dem Fußbodenpaneel 3, wie in der Figur 3 dargestellt, ist zusätzlich noch eine Verriegelungsfeder 20 vorgesehen. Die Verriegelungsfeder 20 ist in einer Nut 21 im Seitenrand 11 eingegliedert. Es versteht sich, dass die Nut 21 mit der Verriegelungsfeder 20 auch in dem anderen Seitenrand 12 angeordnet sein kann. Beim bzw. nach dem Verbinden von zwei benachbarten Fußbodenpaneelen 3 werden die Verriegelungsfedern 20 eigenständig oder fremdbetätigt in eine korrespondierende, am jeweils gegenüberliegenden Seitenrand 12 vorgesehene Nut 22 verlagert. Die Verriegelungsfedern 20 sichern die Verbindung zusätzlich, insbesondere in vertikale Richtung.

Zur Herstellung eines Fußbodenpaneels 1 - 4 wird ein Mehrschichtkörper gebildet. Hierzu wird eine großformatige Ausgangsträgerplatte aus verdichteter Mineralwolle bereitgestellt. Auf die Oberseite der Ausgangsträgerplatte werden die die Dekorschicht 6 bildenden Lagen positioniert, welche zumindest eine Lage aus Dekorpapier 7 umfassen. Unterseitig der Ausgangsträgerplatte wird eine den Gegenzug 10 bildende Lage positioniert. Anschließend wird der Mehrschichtkörper in einer Presse heiß verpresst und die Dekorschicht 6 mit der Ausgangsträgerplatte fest verbunden. Ebenso wird der Gegenzug 10 mit der Ausgangsträgerplatte fest verbunden. Beim Heißverpressen wird die Dekorschicht 6, ebenso wie der Gegenzug 10, durch Polymerisation des enthaltenen Harzes mit der Ausgangsträgerplatte aus verdichteter Mineralwolle verbunden.

Der verpresste Mehrschichtkörper wird aus der Presse entnommen und nach dem Abkühlen in einzelne Paneele 1, 2, 3 und 4 getrennt. In einem weiteren Bearbeitungsschritt werden die Paneele 1 - 4 an ihren Seitenrändern 11, 12 profiliert und mit den Verriegelungsmitteln 13, 14 versehen.

Die Verlegeeigenschaften der beschriebenen Fußbodenpaneelen 1 bis 4 können durch ein Gleitmittel verbessert werden, welches auf die Seitenränder 11, 12, insbesondere im Bereich der Verriegelungsmittel 13, 14, aufgebracht ist. Das Gleitmittel kann beispielsweise in flüssiger Form appliziert werden. Weiterhin kann auf die Seitenränder 11, 12 der Trägerplatte 5, vorzugsweise im Bereich der Verriegelungsmittel 13, 14 ein Dichtmittel aufgebracht sein, um die Wasser- bzw. Feuchtigkeitsumläufigkeit eines verlegten Fußbodenbelags zu verbessern.

Zudem sind die Seitenränder 11, 12 der Trägerplatte 5 im Bereich der Verriegelungsmittel 13, 14 geometrisch so gestaltet, dass ein Flüssigkeitsdurchgang verhindert wird.

Die Unterseite 23 der Trägerplatte 5 bzw. eines Fußbodenpaneels 4 ist mit einer Profilierung 24 versehen sein. Die Profilierung der Unterseite 23 ist derart, dass eine klebtechnische Verbindung der Fußbodenpaneele 4 mit einem Untergrund mittels geeigneter Klebersysteme gefördert wird. Die Profilierung 24 kann rasterförmig oder schachbrettartig mit Erhebungen 25 und Vertiefungen 26 gestaltet sein.

### Bezugszeichen:

- 1 -: Fußbodenpaneel
- 2 -: Fußbodenpaneel
- 3 -: Fußbodenpaneel
- 4 -: Fußbodenpaneel
- 5 -: Trägerplatte
- 6 -: Dekorschicht
- 7 -: Dekorsubstrat
- 8 -: Lage
- 9 -: Versieglungslage
- 10 -: Gegenzug
- 11 -: Seitenrand
- 12 -: Seitenrand
- 13 -: Verriegelungsmittel
- 14 -: Verriegelungsmittel
- 15 -: Kupplungsnut
- 16 -: Rastzunge
- 17 -: Rippe
- 18 -: Kupplungsfeder
- 19 -: Rastnut
- 20 -: Verriegelungsfeder
- 21 -: Nut
- 22 -: Nut
- 23 -: Unterseite
- 24 -: Profilierung
- 25 -: Erhebung
- 26 -: Vertiefung

- d -: Dicke

## Patentansprüche

1. Plattenförmiges Bauelement, insbesondere Fußbodenpaneel, welches eine Trägerplatte (5) mit einer oberseitigen Dekorschicht (6) aufweist, wobei die Dekorschicht (6) ein flächiges Dekorsubstrat (7) umfasst, wobei die Trägerplatte (5) aus verdichteter Steinwolle besteht, wobei die Trägerplatte (5)
- eine Dichte von größer oder gleich (≥) 800 kg/m3, insbesondere zwischen 800 kg/m3 und 1500 kg/m3, vorzugsweise von 900 kg/m3 bis 1400 kg/m3, aufweist,
**dadurch gekennzeichnet, dass** die Trägerplatte (5)
- eine Querzugfestigkeit von größer oder gleich (≥) 2,5 N/mm2, insbesondere zwischen 2,5 N/mm2 und 6,0 N/mm2, vorzugsweise von 3,5 N/mm2 bis 5,0 N/mm2, besitzt sowie
- ein Feuchtigkeitsabsorptionsvermögen bezogen auf ihr Trockenausgangsgewicht von kleiner oder gleich (≤) 5 %, insbesondere von 1,0 % bis 3,0 %, besitzt und
an den Seitenrändern (11, 12) der Trägerplatte (5) Verriegelungsmittel (13, 14) vorgesehen sind sowie die Trägerplatte (5) und die Dekorschicht (6) miteinander verpresst sind, wobei die Dekorschicht (6) mehrlagig aufgebaut ist und die Dekorschicht (6) beim Pressvorgang ihre abschließende Optik erhält.

2. Bauelement nach Anspruch 1, **dadurch gekennzeichnet, dass** die Dekorschicht (6) mehrere Lagen von Dekorpapier und/oder Vliesen und/oder Kraftpapier und/oder ein Overlay und/oder eine Versiegelung und/oder eine Lage aus einem gebundenen Pulvergemisch umfasst.

3. Bauelement nach Anspruch 1 oder 2, **dadurch gekennzeichnet, dass** auf die Seitenränder (11, 12) der Trägerplatte (5), insbesondere im Bereich der Verriegelungsmittel (13, 14) ein Gleitmittel aufgebracht ist.

4. Bauelement nach einem der Ansprüche 1 bis 3, **dadurch gekennzeichnet, dass** auf die Seitenränder (11, 12) der Trägerplatte (5), insbesondere im Bereich der Verriegelungsmittel (13, 14) ein Dichtmittel aufgebracht ist.

5. Bauelement nach einem der Ansprüche 1 bis 4, **dadurch gekennzeichnet, dass** die Seitenränder (11, 12) der Trägerplatte (5), insbesondere im Bereich der Verriegelungsmittel (13, 14) geometrisch so gestaltet sind, dass ein Flüssigkeitsdurchgang verhindert wird.

6. Bauelement nach einem der Ansprüche 1 bis 5, **dadurch gekennzeichnet, dass** unterseitig der Trägerplatte (5) ein Gegenzug (10) vorgesehen ist.

7. Bauelement nach einem der Ansprüche 1 bis 6, **dadurch gekennzeichnet, dass** ihre Unterseite (23) profiliert und/oder geprägt, insbesondere aufgeraut, ist.

8. Bauelement nach einem der Ansprüche 1 bis 7, **dadurch gekennzeichnet, dass** die Dekorschicht (6) sicht- bzw. oberseitig eine Struktur aufweist, insbesondere eine Struktur mit einer Tiefe größer 80 µm.

## Claims

1. Plate-shaped building element, in particular floor panel, which has a carrier plate (5) with a decorative layer (6) on the upper side, wherein the decorative layer (6) comprises a flat decorative substrate (7), wherein the carrier plate (5) consists of compressed rock wool, wherein the carrier plate (5)
- has a density of greater than or equal to (≥) 800 kg/m3, in particular between 800 kg/m3 and 1500 kg/m3, preferably from 900 kg/m3 to 1400 kg/m3,
**characterised in that** the carrier plate (5)
- has a transverse tensile strength of greater than or equal to (≥) 2.5 N/mm2, in particular between 2.5 N/mm2 and 6.0 N/mm2, preferably from 3.5 N/mm2 to 5.0 N/mm2, and
- has a moisture absorption capacity, based on its initial dry weight, of less than or equal to (≤) 5%, in particular from 1.0% to 3.0%, and
locking means (13, 14) are provided on the side edges (11, 12) of the carrier plate (5), and the carrier plate (5) and the decorative layer (6) are pressed together, wherein the decorative layer (6) is constructed in several layers and obtains its final appearance during the pressing process.

2. Building element according to claim 1, **characterised in that** the decorative layer (6) comprises several layers of decorative paper and/or nonwovens and/or kraft paper and/or an overlay and/or a seal and/or a layer made of a bound powder mixture .

3. Building element according to claim 1 or 2, **characterised in that** a lubricant is applied to the side edges (11, 12) of the carrier plate (5), in particular in the region of the locking means (13, 14).

4. Building element according to any of claims 1 to 3, **characterised in that** a sealant is applied to the side edges (11, 12) of the carrier plate (5), in particular in the region of the locking means (13, 14).

5. Building element according to any of claims 1 to 4, **characterised in that** the side edges (11, 12) of the carrier plate (5), in particular in the region of the locking means (13, 14), are geometrically designed in such a way that liquid passage is prevented.

6. Building element according to any of claims 1 to 5, **characterised in that** a counterpull (10) is provided on the underside of the carrier plate (5).

7. Building element according to any of claims 1 to 6, **characterised in that** its underside (23) is profiled and/or embossed, in particular roughened.

8. Building element according to any of claims 1 to 7, **characterised in that** the decorative layer (6) has a structure on the visible or upper side, in particular a structure with a depth greater than 80 µm.

## Revendications

1. Élément de construction en forme de plaque, en particulier panneau de plancher, lequel présente une plaque de support (5) avec une couche décorative (6) supérieure, dans lequel la couche décorative (6) comprend un substrat décoratif (7) plat, dans lequel la plaque de support (5) est en laine de roche compactée, dans lequel la plaque de support (5)
- présente une densité supérieure ou égale (≥) à 800 kg/m3, en particulier entre 800 kg/m3 et 1500 kg/m3, de préférence de 900 kg/m3 à 1400 kg/m3,
**caractérisé en ce que** la plaque de support (5)
- dispose d'une résistance à la traction transversale supérieure ou égale (≥) à 2,5 N/mm2, en particulier entre 2,5 N/mm2 et 6,0 N/mm2, de préférence de 3,5 N/mm2 à 5,0 N/mm2 et
- dispose d'un pouvoir d'absorption de l'humidité par rapport à son poids initial sec inférieur ou égal (≤) à 5 %, en particulier de 1,0 % à 3,0 %, et
des moyens de verrouillage (13, 14) sont prévus au niveau des bords latéraux (11, 12) de la plaque de support (5) et la plaque de support (5) et la couche décorative (6) sont compressées l'une avec l'autre, dans lequel la couche décorative (6) est formée de plusieurs couches et la couche décorative (6) obtient son aspect final lors de l'opération de compression.

2. Élément de construction selon la revendication 1, **caractérisé en ce que** la couche décorative (6) comprend plusieurs couches de papier décoratif et/ou de non-tissés et/ou de papier Kraft et/ou un overlay et/ou un scellage et/ou une couche en un mélange de poudre lié.

3. Élément de construction selon la revendication 1 ou 2, **caractérisé en ce qu'**un lubrifiant est appliqué sur les bords latéraux (11, 12) de la plaque de support (5), en particulier dans la zone des moyens de verrouillage (13, 14).

4. Élément de construction selon l'une quelconque des revendications 1 à 3, **caractérisé en ce qu'**un moyen d'étanchéité est appliqué sur les bords latéraux (11, 12) de la plaque de support (5), en particulier dans la zone des moyens de verrouillage (13, 14).

5. Élément de construction selon l'une quelconque des revendications 1 à 4, **caractérisé en ce que** les bords latéraux (11, 12) de la plaque de support (5), en particulier dans la zone des moyens de verrouillage (13,14) sont configurés de manière géométrique de sorte à empêcher un passage de fluide.

6. Élément de construction selon l'une quelconque des revendications 1 à 5, **caractérisé en ce qu'**une contre-traction (10) est prévue en dessous de la plaque de support (5).

7. Élément de construction selon l'une quelconque des revendications 1 à 6, **caractérisé en ce que** son côté inférieur (23) est profilé et/ou imprégné, en particulier rendu rugueux.

8. Élément de construction selon l'une quelconque des revendications 1 à 7, **caractérisé en ce que** la couche décorative (6) présente côté visible ou supérieur une structure, en particulier une structure avec une profondeur supérieure à 80 µm.
